# EUROPÄISCHE PATENTANMELDUNG

(11) **EP 2 563 027 A1**
(43) Veröffentlichungstag der Anmeldung: **27.02.2013**
(21) Anmeldenummer: 12175225.7
(22) Anmeldetag: 06.07.2012
(51) Int. Cl.: H04N 21/214, H04N 21/233, H04N 21/414, H04N 21/81, G11B 20/00, G10K 11/178

(54) **Verfahren zum Schützen von Dateninhalten**

(30) Priorität: 22.08.2011 EP 11178244
(71) Anmelder: Siemens AG Österreich, 1210 Wien (AT)
(72) Erfinder: Gudenus, Gabriel, 1210 Wien (AT); Schreiber, Gerald, 21465 Wentorf (DE)
(74) Vertreter: Maier, Daniel Oliver

(57) **Zusammenfassung**

Die Erfindung betrifft ein Verfahren zum Schützen von Dateninhalten (DI), insbesondere Audio- und/oder Videodateninhalten, vor widerrechtlichem Kopieren. Dabei werden die Dateninhalte (DI) von einem Unterhaltungssystem (US) oder Entertainment-System in einer berechtigten Abspielumgebung (ASU) zur Verfügung gestellt (1) und können auf in der berechtigten Abspielumgebung (ASU) befindlichen Ausgabeeinheiten (AE1, AE2, ..., AEn) ausgegeben bzw. abgespielt werden (4). Die Dateninhalte (DI) werden vom Unterhaltungssystem (US) an eine Ausgabeeinheit (AE1, AE2, ..., AEn) übertragen (3). Zu den Dateninhalten (DI) wird dabei ein Störsignal (SG) - beispielsweise vor Aufspielen der Dateninhalte (DI) auf das Unterhaltungssystem (US), vor einer Übertragung auf die Ausgabeeinheiten (AE1, AE2, ..., AEn) oder vor einem Abspielen auf den Ausgabeeinheiten (AE1, AE2, ..., AEn) - derart beigefügt (2), dass bei einem Abspielen der Dateninhalte (DI) außerhalb der berechtigten Abspielumgebung (ASU) eine Störung des Abspielvorgangs und/oder der Abspielqualität bewirkt wird. Beim erfindungsgemäßen Verfahren wird die Tatsache ausgenutzt, dass bei einem Abspielen von Dateninhalten (DI) immer von idealen Umgebungsbedingungen ausgegangen wird. Da in realen Abspielumgebungen häufig Hintergrundgeräusche vorhanden sind, wird das Störsignal (SG) in dieser Abspielumgebung (ASU) nicht als störend wahrgenommen. Bei einer Kopie - insbesondere beim Abspielen in einer idealen Abspielumgebung - wirkt sich das Störsignal (SG) deutlich auf die Qualität der Dateninhalte (DI) aus. Damit kann durch das erfindungsgemäße Verfahren auf vorteilhafte Weise ein zusätzlicher Schutz - neben gängigen Schutzmechanismen - für Dateninhalte (DI), insbesondere beim Ausspielen in Personenbeförderungseinrichtungen wie z.B. Flugzeugen, etc. erreicht werden.

## Beschreibung

### Technisches Gebiet

Die Erfindung betrifft ein Verfahren zum Schützen von Dateninhalten, insbesondere Audio- und/oder Videodateninhalten, vor widerrechtlichem Kopieren. Dabei werden die Dateninhalte von einem Unterhaltungssystem bzw. Entertainment-System in einer berechtigten Abspielumgebung zur Verfügung gestellt und können auf Ausgabeeinheiten in der berechtigten Abspielumgebung ausgegeben bzw. abgespielt werden.

### Stand der Technik

Bei marktüblichen Entertainment- oder Unterhaltungssystemen, welche z.B. in Flugzeugen für die so genannte OnBoard-Unterhaltung eingesetzt werden, können aufgrund einer geschützten Architektur beispielsweise durch Einbau von Ausgabeeinheiten in den Sitzen und/oder geschützte Netzwerke, welche nur speziellen Technikern und Ingenieuren zugänglich sind, sehr hochwertige Dateninhalte angeboten werden. Derartige Dateninhalte sind beispielsweise Audio- und/oder Videoinhalten (z.B. Musikclips, Filme, Serien, etc.), welche in einem so genannten Airline Hospitality Window z.B. bei Flügen den Passagieren gezeigt werden. Das bedeutet, dass die Dateninhalte bereits vor einem Erscheinen am Markt z.B. auf einer DVD, etc. oder z.B. sehr kurz nach einer Veröffentlichung im Kino, etc. bereits über derartige Entertainment- und Unterhaltungssysteme insbesondere in Flugzeugen zur Verfügung gestellt werden.

Durch den Markttrend beispielsweise von fertig eingebauten Ausgabeeinheiten (z.B. Bildschirmen, etc.) bei Entertainment-und Unterhaltungssystemen auf so genannte Personal Entertainment Devices (PED) wie z.B. Smartphones, Tablet PCs und/oder Laptops zu wechseln oder z.B. die Inhalte des Entertainment-und Unterhaltungssystems einem Endgeräte eines Nutzers direkt zugänglich zu machen, ist ein Schutz der hochwertigen Dateninhalte durch z.B. einen abgegrenzte Systemarchitektur des Unterhaltungssystems nicht mehr gegeben. Dadurch kann es dazu kommen, dass Inhaber der Dateninhalte oder Inhaber von Rechten an den Dateninhalten (z.B. Filmstudios, Verleihfirmen, etc.) die Dateninhalte nur mehr ungern oder gar nicht mehr - z.B. in einem so genannten Airline Hospitality Window - zur Verfügung stellen wollen. Um auch weiterhin möglichst hochwertige Dateninhalte wie z.B. Audio- und/oder Videodateninhalte anbieten zu können, wird es daher notwendig sein, Schutzmechanismen zu finden, welche eine Verfügbarkeit auf so genannten Personal Entertainment Devices als Ausgabeeinheiten ermöglichen, aber einen Schutz vor widerrechtlichem Kopieren und/oder Abspielen unterbinden.

Bei heute gängigen Entertainment- bzw. Unterhaltungssystemen ist durch eine vollkommene Isolation der Netzwerke und Server, welche z.B. nur für autorisiertes Personal oder berechtigte Techniker zugänglich sind, ein Schutz der Dateninhalte gegeben. Die Dateninhalte werden beispielsweise bei InFight-Entertainment-Systemen auf an der Decke der Flugzeugkabine befestigten oder in den Sitz eingebauten Ausgabeeinheiten ausgegeben und angezeigt. Eine Ausgabe auf so genannten Personal Entertainment Devices bzw. privaten mobilen Endgeräten der Nutzer wie z.B. Smartphones, Tablet PCs, etc. ist bei diesen Systemen allerdings nicht möglich. Dadurch sind diese Systeme allerdings relativ unflexible und ein Anzeigen der Dateninhalte ist an z.B. einen Sitzplatz im Flugzeug, etc. gebunden.

Werden so genannte Personal Entertainment Devices bzw. bei mobilen Endgeräten als Ausgabeeinheiten gibt es mittlerweile verschiedene Verfahren und gängige Schutzmechanismen, um angebotene Dateninhalten vor unberechtigter Nutzung (z.B. Abspielen, Kopieren, etc.) zu schützen. Derartige bereits gängige Schutzmechanismen sind z.B. Digital Rights Management (Encryption), Conditional Access, (Sitzung basiertes) Watermarking bzw. Kennzeichnen mittels so genannter digitalen Wasserzeichen, Client Hardening, Deaktivieren von Video-Ausgängen, etc.

Unter Digital Right Management (DRM) bzw. digitaler Rechteverwaltung werden Verfahren und/oder Systeme verstanden, mit welchen eine Nutzung sowie gegebenenfalls auch einen Verbreitung von digitalen Dateninhalten kontrolliert werden kann. Vor allem bei Audio- und/oder Videodateninhalte, aber auch bei Software, elektronischen Dokumenten und/oder elektronischen Büchern findet die digitale Rechteverwaltung (DRM) bzw. Nutzungssicherung Verwendung. Durch DRM wird es Anbietern von Dateninhalten ermöglicht, eine Nutzungskontrolle für ihre Dateninhalte durchzuführen, prinzipiell neue Abrechnungsmöglichkeiten (z.B. Vergütung von Lizenzen, Berechtigungen, etc.) zu entwickeln und sich damit Nutzungsrechte an Dateninhalten anstatt die Dateninhalte selbst, vergüten zu lassen.

Damit kann die Nutzung von Dateninhalten z.B. auf eine zuvor getroffene Nutzungsvereinbarung eingeschränkt werden. Beim DRM werden z.B. Audio- und/oder Videodateninhalte, etc. vor einer digitalen Übertragung auf eine Ausgabeeinheit verschlüsselt. D.h. der Datenstrom für die Übertragung der Dateninhalte wird vom DRM-System verschlüsselt. Der verschlüsselte Datenstrom wird dann an die Ausgabeeinheit übertragen und dann direkt auf der Ausgabeeinheit des jeweiligen Nutzers bei entsprechenden Berechtigungen und/oder Prüfung der Berechtigungen durch das DRM-System, etc. entschlüsselt. Digital Right Management weist allerdings den Nachteil auf, dass für eine weitere Darstellung der Dateninhalte auf der Ausgabeeinheit die Dateninhalte vollkommen unverschlüsselt vorliegen müssen. Dabei besteht dann die Gefahr, dass die Dateninhalte (z.B. Videoinhalt vor Verfügbarkeit auf so genannten DVDs, etc.) z.B. während der Wiedergabe auf der Ausgabeeinheit beispielsweise (digital) abgefilmt oder kopiert werden und somit entgegen der Nutzungsvereinbarung weiterverwenden werden können.

Ein so genannter Conditional Access oder ein Zugangsberechtigungssystem ist eine Schutzmethode für Dateninhalte, bei welcher bestimmte Kriterien eingehalten werden müssen, bevor ein Zugriff/Zugang zu den Dateninhalten bereitgestellt wird. Conditional Access wird beispielweise häufig im Bereich des digitalen Fernsehens, insbesondere bei kostenpflichtigen Satelliten-TV-Sendern (so genanntem Pay-TV) eingesetzt. So wird z.B. beim Digitalfernsehen eingesetzten Common Access-Verfahren, von welchem die Dateninhalte verschlüsselt und entschlüsselt werden, ein sich ständig veränderndes Kontrollwort verwendet, durch welches die Dateninhalte auf Empfängerseite entschlüsselt werden können. Dieses Kontrollwort wird von einem so genannten Common-Access-System einer berechtigten Ausgabeeinheit zur Verfügung gestellt und sorgt dafür, dass nur definierte Empfänger bzw. Ausgabeeinheiten adressiert werden und das Kontrollwort erhalten. Auf der Empfängerseite bzw. in der Ausgabeeinheit werden dazu üblicherweise ein nutzerunabhängiges Conditional Access-Modul und eine nutzerabhängige Smartcard genutzt. Damit weist ein Conditional Access - insbesondere im Zusammenhang mit Entertainment-Systemen z.B. in einem Flugzeug - den Nachteil auf, dass die Endgeräte mit zusätzlichen Einheiten wie z.B Common Access-Modulen und Smartcard ausgestattet sein müssen. Zusätzlich hindern diese Einrichtungen einen Nutzer nicht am Kopieren bzw. Speichern der Dateninhalte, sobald diese auf der jeweiligen Ausgabeeinheit entschlüsselt sind.

Eine weitere Möglichkeit Dateninhalte zu schützen ist das so genannte digitale Watermarking oder digitale Wasserzeichen. Damit werden üblicherweise nicht wahrnehmbare Markierungen in Trägermedien der Dateninhalte wie z.B. Bilder, Videos, 3D-Daten, Audiomaterial und/oder Texte bezeichnet. Diese digitalen Wasserzeichen können dann mittels computergestützter Verfahren ausgelesen werden und für verschiedene Einsatzzwecke (z.B. Verfolgung von Urheberrechtsverletzungen, Nachweis von Datenintegrität und/oder -authentizität, etc.) verwendet werden. Allerdings weisen digitale Wasserzeichen den Nachteil auf, dass sie keinen direkten Schutzmechanismus für die Dateninhalte darstellen. Mit ihnen können z.B. nur Urheberrechtsverletzungen nachgewiesen und/oder mögliche illegale Kopien von Dateninhalten bzw. deren Ausspielen identifiziert werden.

Beim so genannten Client Hardening geht es üblicherweise darum eine Ausgabeeinheit wie z.B. einen so genannte Client, von welchem in einem Computersystem mit einem so genannten Server Kontakt aufgenommen wird, um z.B. Dateninhalte, Anwendungen und/oder Dienstleistungen von diesem Server zu beziehen, gegen unberechtigte Manipulationen (z.B. Installieren oder De-Installieren von Client-Software, Anwendungen, genutzten Diensten und/oder Dateninhalten, etc.) zu schützen. Bei einer Ausgabeeinheit, bei welcher so genanntes Client Hardening angewendet worden ist, kann beispielsweise nur mehr von einer berechtigten Person (z.B. Administrator, etc.) eine Änderung von Software und/oder Dateninhalte (z.B. Löschen, Kopieren, etc.) durchgeführt werden. Durch unberechtigte Personen können auf dieser Ausgabeeinheit z.B. an den eingerichteten Schutzvorrichtungen und/oder der Software keine Änderungen und/oder Manipulationen mehr vorgenommen werden. Allerdings besteht beim Client Hardening der Nachteil, dass zum Einrichten von z.B. neuen Dateninhalten und/oder für Änderungen immer ein berechtigter Administrator verfügbar sein muss. Damit wird das Client Hardening - insbesondere im Bereich von Entertainment- bzw. Unterhaltungssystemen - relativ aufwendig und kostenintensiv sowie unflexibel, da z.B. private Endgeräte eines Nutzers nicht als Ausgabeeinheit genutzt werden können.

Weiterhin kann ein unberechtigtes Kopieren von zur Verfügung gestellten Dateninhalten auch durch ein Deaktivieren von Videoausgängen z.B. der Ausgabeeinheit verhindert werden. Diese Deaktivierung muss allerdings bei jedem Ausgabegerät vor einem Einsatz durchgeführt werden. Außerdem wird dadurch nicht verhindert, dass die Dateninhalte beispielsweise direkt von der Ausgabeeinheit mittels einem Aufnahmegerät (z.B. Kamera, Smartphone, etc.) abgefilmt bzw. aufgenommen und dann z.B. unberechtigter Weise abgespielt oder vervielfältigt werden.

### Darstellung der Erfindung

Der Erfindung liegt daher die Aufgabe zugrunde, ein Verfahren zum Schützen von Dateninhalten gegen widerrechtliches Kopieren anzugeben, durch welches auf einfache, flexible und kostengünstige Weise ein unberechtigtes Kopieren und/oder Vervielfältigen von Dateninhalten verhindert und gängige Schutzmechanismen um einen weiteren Schutzlevel für beliebige Ausgabeeinheiten erweitert bzw. verbessert werden.

Erfindungsgemäß erfolgt die Lösung der Aufgabe durch eine Verfahren der eingangs angeführten Art, welches die in Anspruch 1 beschriebenen Merkmale aufweist. Vorteilhafte Ausgestaltungen des Verfahrens sind in den abhängigen Ansprüchen angeführt.

Gemäß der Erfindung nach Anspruch 1 ist vorgesehen, dass Dateninhalte, welche von einem Unterhaltungssystem zur Verfügung gestellt werden, in einer berechtigten Abspielumgebung auf in dieser Abspielumgebung befindliche Ausgabeeinheiten übertragen werden. Zu den Dateninhalten wird ein Störsignal derart hinzugefügt, dass bei einem Abspielen der Dateninhalte außerhalb der berechtigten Abspielumgebung eine Störung bewirkt wird.

Der Hauptaspekt der erfindungsgemäß vorgeschlagenen Lösung besteht darin, dass beim erfindungsgemäßen Verfahren die Tatsache ausgenutzt wird, dass bei einem Abspielen von Dateninhalten, insbesondere beim Abspielen von Audiodateninhalten bzw. von einem Audioanteil der Dateninhalte (z.B. Videodateninhalte, etc.) immer von idealen Umgebungsbedingungen ausgegangen wird. Das bedeutet, es werden beispielsweise vorhandene Umgebungsgeräusche und/oder Störungen durch die Abspielumgebung nicht berücksichtigt. Beim Abspielen der Dateninhalte in einer berechtigten Abspielumgebung wie z.B. in einem Flugzeug herrschen keine idealen Umgebungsbedingungen. Beim Abspielen der Dateninhalte kommt es daher zu Störungen durch die Abspielumgebung beispielsweise durch Hintergrundgeräusche, einem Lärmpegel in der Abspielumgebung, etc. Aufgrund dieser Tatsache, welche von der gegenständlichen Erfindung ausgenutzt wird, können die Dateninhalte und dabei vor allem der Audioanteil derart manipuliert werden, dass es bei einem berechtigten Abspielen der Dateninhalte in der berechtigten Abspielumgebung keine Qualitätsminderungen auftreten. Das Störsignal wird daher in dieser Abspielumgebung aufgrund der Hintergrundgeräusche vom Nutzer subjektiv nicht oder zumindest nicht als störend wahrgenommen. Bei einer Kopie der Dateninhalte - insbesondere beim Abspielen in einer idealen Abspielumgebung (z.B. in einem Heimkino, etc.) - wirkt sich das Störsignal deutlich auf die Qualität der Dateninhalte aus. Dadurch wird die Kopie der Dateninhalte unbrauchbar. Durch das Störsignal werden die Dateninhalte auf einfache Weise und ohne großen zusätzlichen Aufwand zusätzlich geschützt bzw. ein Schutz der Dateninhalte verbessert.

Idealer Weise wird das Störsignal entweder vor einem Aufspielen der Dateninhalte auf des Unterhaltungssystem oder vor einem Übertragen auf die jeweilige Ausgabeeinheit oder vor einem Abspielen der Dateninhalte auf der jeweiligen Ausgabeeinheit beigefügt. Damit können auf einfache und flexible Weise Dateninhalte zusätzlich geschützt werden. Es ist dabei beispielsweise unerheblich, ob sich die Dateninhalte bereits auf dem Unterhaltungssystem befinden oder erst aufgespielt werden. Das Beifügen des Störsignals kann sehr einfach an die jeweiligen Gegebenheiten angepasst werden.

Es ist vorteilhaft, wenn das Störsignal einem Audioanteil der Dateninhalte beigefügt wird. Eine derartige Manipulation der Dateninhalten - d.h. ein Hinzufügen eines Störsignals, welches dem Audioanteil (z.B. Audiodateninhalten, Audiospur von Videodateninhalten) der Dateninhalte beigemischt wird - kann auf unterschiedliche Weise erfolgen. Es kann als Störsignal ein Rauschen verwendet werden, welche die Audioanteile der Dateninhalte als Störung "ummantelt". Das Beifügen eines Rauschens kann beispielsweise als passives Audio Noise Cloak bezeichnet werden. Das Rauschen ist aufgrund der ständigen Hintergrundgeräusche in der berechtigten Abspielumgebung (z.B. im Innenraum eines Flugzeugs) (subjektiv) nicht wahrnehmbar. In einer leisen Umgebung wie z.B. in einem Heimkino wird durch das Rauschen eine permanente Störung bei der Wiedergabe der Dateninhalte erzeugt.

Es ist aber auch günstig, wenn als Störsignal ein gemischtes Signal verwendet wird. Dabei wird ein Rauschen mit einem phasenverschobenen Störgeräusch der berechtigten Abspielumgebung gemischt und dann als Störsignal zu den Dateninhalten hinzugefügt. Das bedeutet, dass das Beimengen eines Störsignals zu den Dateninhalten mit aktiven Lärmreduktionstechnologien - so genannten Active Noise Reduction Technologies - kombiniert wird. Eine Möglichkeit zur aktiven Lärmreduktion bei Wiedergabe von Dateninhalten ist z.B. die Verwendung eines phasenverschobenen Störgeräusches. Dadurch kann beispielsweise in einer lauten Umgebung eine signifikante Reduktion einer Störung durch Umgebungslärm und/oder -geräusche (z.B. Geräusch von Flugzeugmotoren, etc.) erzielt werden. Bei aktiver Lärmreduktion wird dies beispielsweise durch Einspeisen entsprechender Geräusche direkt über Kopfhörer (z.B. Mikrophone in einem Kopfhörer, etc.) oder in geschlossenen Räumen auch gezielt über mehrere Mikrophone, Lautsprecher, etc., von welchen anti-phasische Wellen erzeugt werden, durchgeführt.

Die Kombination des Störsignals bzw. eines Rauschens mit einem phasenverschobenen Störgeräusch der berechtigten Abspielumgebung (z.B. Echtgeräusch eines Flugzeugs, Hintergrundgeräusch der Flugzeugtriebwerke, Hintergrundgeräusch eines fahrenden Zuges, etc.) kann der Effekt, dass beim Abspielen der Dateninhalte in der berechtigten Abspielumgebung eine Störung bzw. das Störsignal subjektiv wahrgenommen wird, aber in einer anderen Abspielumgebung störend wirkt, noch verstärkt werden. Durch eine zusätzliche Verwendung eines phasenverschobenen Störgeräusches aus der berechtigten Abspielumgebung wird in der berechtigten Abspielumgebung eine Verbesserung der Abspielqualität, insbesondere der Audioqualität, erreicht. In einer anderen Umgebung bzw. beim Abspielen einer Kopie der Dateninhalte kommt es aber zu einer wesentlichen Verschlechterung der Abspielqualität, wodurch diese unbrauchbar wird.

Eine zweckmäßige Weiterbildung der Erfindung sieht vor, dass als berechtigte Abspielumgebung für die Dateninhalte ein Innenraum eines Personenbeförderungsmittels, insbesondere eines Flugzeugs, vorgesehen wird. Damit können auf sehr einfache Weise hochwertige Dateninhalte, welche z.B. in einem Personenbeförderungsmittel wie einem Flugzeug in einem so genannten "Hospitality Window" angeboten werden, geschützt werden. Vor allem kann ausgenutzt werden, dass in Personenbeförderungsmittel spezielle und eindeutig identifizierbare Hintergrundgeräusche (z.B. Flugzeugmotoren bzw. -triebwerk, etc.) vorliegen, welche dann sehr einfach mit einem Rauschen zu einem Störsignal kombiniert werden können.

Bei einer bevorzugten Fortbildung des erfindungsgemäßen Verfahrens ist vorgesehen, dass als Ausgabeeinheit ein mobiles Endgerät eines Benutzers, insbesondere ein Smartphone, TabletPC, etc. oder ein Personal Entertainment Device verwendet wird. Damit können auf einfache Weise beliebige Endgeräte nutzerspezifisch und flexibel als Ausgabeeinheiten verwendet werden, ohne dass beispielsweise Berechtigungen und/oder Rechte an hochwertigen Dateninhalten verletzt werden. Durch das den Dateninhalten beigefügte Störsignal wird beispielsweise das Kopieren der Dateninhalte uninteressant, da die Dateninhalte beim Abspielen außerhalb der berechtigten Abspielumgebung nicht störungsfrei wiedergegeben werden können.

### Kurzbeschreibung der Zeichnung

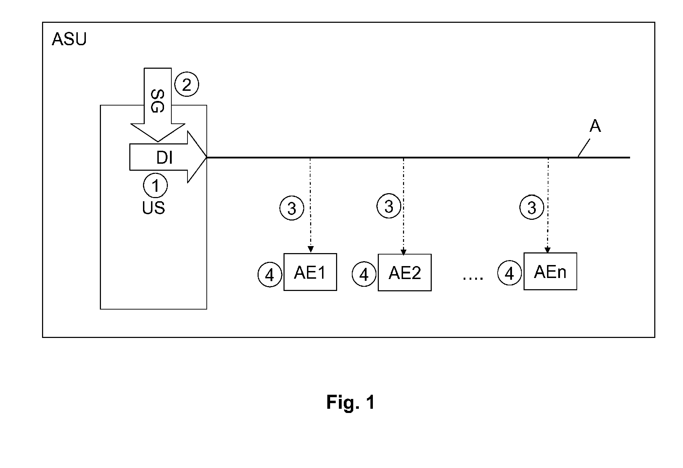

Die Erfindung wird nachfolgend in beispielhafter Weise anhand der beigefügten Figur 1 erläutert. Es zeigt Figur 1 beispielhaft und schematisch einen Ablauf des erfindungsgemäßen Verfahrens zum Schützen von Dateninhalten.

### Ausführung der Erfindung

In der Figur 1 ist schematisch und beispielhaft eine berechtigte Abspielumgebung ASU wie z.B. ein Innenraum eines Personenbeförderungsmittels, insbesondere eines Flugzeugs, eines Eisenbahnzugs, etc. dargestellt. In dieser berechtigten Abspielumgebung ASU ist ein Unterhaltungssystem US bzw. ein Entertainment-System US vorgesehen. Mit dem Unterhaltungssystem US können Nutzern (z.B. Passagieren der Personenbeförderungseinrichtung) Dateninhalte DI, insbesondere Audiodateninhalte und/oder Videodateninhalte, z.B. als Unterhaltungsprogramm zur Verfügung gestellt werden. Diese Dateninhalte DI sind z.B. Audio- und/oder Videodateninhalte wie z.B. Filme, Musikclips, Serien, etc., welche beispielsweise einem Betreiber des Personenbeförderungsmittels in einem so genannten "Hosipitality Window" - d.h. noch vor einem Erscheinen am Markt z.b. auf DVD, etc. - zur Verfügung gestellt werden.

Für eine Ausgabe, Abrufen durch einen Nutzer und eine Abspielen der Dateninhalte DI sind in der berechtigten Abspielumgebung ASU Ausgabeeinheiten AE1, AE2, ..., AEn vorgesehen. Diese Ausgabeeinheiten AE1, AE2, ..., AEn sind über eine Verteileinrichtung A mit dem Unterhaltungssystem US verbunden, wobei die Dateninhalte DI über diese Verteileinrichtung A vom Unterhaltungssystem US zu den Ausgabeeinheiten AE1, AE2, ..., AEn transportiert werden. Als Ausgabeeinheiten AE1, AE2, ..., AEn können beispielsweise in der berechtigten Abspielumgebung ASU fest eingebaute Bildschirme vorgesehen sein, welche z.B. über eine Verkabelung als Verteileinrichtung A mit dem Unterhaltungssystem US verbunden sind.

Es ist aber auch möglich, dass die Ausgabeeinheiten AE1, AE2, ..., AEn als so genannte Personal Entertainment Devices (z.B. Smartphone, TabletPC, etc.) ausgeführt sind, welche Nutzer zur Verfügung gestellt werden, oder dass dem Nutzer gehörende mobile Endgeräte wie z.B. Smartphone, TabletPC, Laptop, etc. als Ausgabeeinheiten AE1, AE2, ..., AEn für ein Ausgeben und Abspielen der Dateninhalte DI genutzt werden können. In diesem Fall kann als Verteileinrichtung A zum Übertragen der Dateninhalte DI beispielsweise ein Funkkommunikationssystem wie z.B. WirelessLAN, GSM, UMTS, GSM-on-Board, etc. verwendet werden.

Wird z.B. nach einem Start der Personenbeförderungseinrichtung mit der berechtigten Abspielumgebung ASU das Unterhaltungssystem US in Betrieb genommen, so werden in einem ersten Verfahrensschritt 1 vom Unterhaltungssystem US Dateninhalte DI zur Verfügung gestellt. Diese Dateninhalte DI können z.B. über Auswahl auf den in der berechtigten Abspielumgebung ASU befindlichen Ausgabeeinheiten AE1, AE2, ..., AEn abgerufen und ausgegeben werden. Dabei wird in einem zweiten Verfahrensschritt 2 zu den Dateninhalten DI ein Störsignal SG derart hinzugefügt, dass bei einem Abspielen der Dateninhalte DI außerhalb der berechtigten Abspielumgebung ASU eine Störung und/oder ein deutliche Qualitätsminderung der Dateninhalte DI bewirkt wird. D.h. eine Wiedergabe der Dateninhalte DI in einer nicht berechtigten Umgebung wird durch das Störsignal SG permanent und deutlich gestört.

Das Störsignal SG kann dabei vor einem Ausspielen bzw. Übertragen der Dateninhalte DI zu den Ausgabeeinheiten AE1, AE2, ..., AEn auf den Unterhaltungssystem US den Dateninhalten DI beigemischt werden. Alternativ kann das Störsignal SG beispielsweise auch beim oder vor einem Aufspielen der Dateninhalte DI auf das Unterhaltungssystem US zu den Dateninhalten hinzugefügt werden. Weiterhin besteht die Möglichkeit das Störsignal SG erst in der Ausgabeeinheit AE1, AE2, ..., AEn zu den Dateninhalten DI zu ergänzen.

Das Störsignal SG, welches z.B. im zweiten Verfahrensschritt 2 vor dem Übertragen der Dateninhalte DI ergänzt wird, wird idealer Weise einem Audioanteil der Dateninhalte DI beigemischt. Dabei kann als Störsignal SG beispielsweise ein Rauschen verwendet werden. Dieses Rauschen SG wird in der berechtigten Abspielumgebung ASU aufgrund vorhandener Hintergrundgeräusche (z.B. Flugzeuggeräusche, etc.) oder eines Lärmpegels (subjektiv) nicht wahrgenommen. In einer leisen Umgebung wie z.B. in einem Heimkino wird durch das Rauschen SG eine permanente Störung bei der Wiedergabe der Dateninhalte DI erzeugt. Durch das Rauschen SG als Störsignal SG werden die Dateninhalte DI bzw. die Audioanteil der Dateninhalte DI "ummantelt", weshalb auch von so genanntem passivem Audio Noise Cloaking gesprochen werden kann.

Alternativ kann das verwendete Störsignal SG bzw. das passive Audio Noise Cloaking mit aktiven Lärmreduktionstechnologien kombiniert werden. Dabei werden beim Störsignals SG in der berechtigten Abspielumgebung ASU vorhandene bzw. bekannte Hintergrund- und/oder Störgeräusche berücksichtigt. Das bedeutet, als Störsignal SG wird einen Kombination aus einem Rauschen und einem phasenverschobenen Störgeräusch der berechtigten Abspielumgebung ASU verwendet (d.h. ein phasenverschobenes Echtgeräusch, durch welches eine Phasenaufhebung mit dem vorhandenen Störgeräusch bewirkt wird). Durch eine derartige Kombination wird bewirkt, dass einerseits in der berechtigten Abspielumgebung ASU eine Verbesserung der Abspielqualität der Dateninhalte DI, insbesondere der Audioanteil, erzielt wird. Andererseits kommt es in einer nicht berechtigten Abspielumgebung zu einer wesentlichen Verschlechterung der Abspielqualität der Dateninhalte DI, wodurch die Kopie und/oder weitere Kopien der Dateninhalte DI uninteressant sind.

Durch aktive Lärmreduktionstechnologien können derzeit z.B. insbesondere tieffrequente Hintergrund- bzw. Störgeräusche erfolgreich reduziert werden, da bei hochfrequenten Schallwellen ein Abstand zwischen einer Schallquelle und dem Innenohr des Nutzer zu groß ist, um einen exakte Phasenaufhebung der beiden phasenverschobenen Geräusch zu erwirken. Zusätzlich muss bei kurzen Wellen ein Abstand zwischen einem Mikrophon und der Schallquelle bzw. dem Kopfhörer auch relativ nahe sein. Da aber beispielsweise in Personenbeförderungsmittel wie Flugzeugen hauptsächlich tieffrequente Störgeräusche - beispielsweise in einem Frequenzbereich von ca. 50 bis 600 Hertz - auftreten, kann die Kombination von Störsignal SG bzw. Rauschen SG mit einer aktiven Lärm- bzw. Störgeräuschreduktionstechnologie zu einer Verbesserung in der Abspielqualität der Dateninhalte DI z.B. im Flugzeug sowie zu einem erweiterten Schutz der Dateninhalte DI (z.B. vor unberechtigtem Kopieren, Abfilmen, etc.) genutzt werden. Diese Kombination kann auch als aktives Audio Noise Cloaking bezeichnet werden.

Nach einer Ergänzung eines Störsignals SG im zweiten Verfahrensschritt 2 werden die Dateninhalte dann in einem dritten Verfahrensschritt 3 über die Verteileinrichtung A an die Ausgabeeinheiten AE1, AE2, ..., AEn weitergeleitet. In einem vierten Verfahrensschritt 4 können die Dateninhalte DI dann auf dem Ausgabeeinheiten AE1, AE2, ..., AEn ausgegeben und abgespielt werden.

Ein Beimischen bzw. Hinzufügen eines Störsignals SG zu den Dateninhalten DI, insbesondere zum Audioanteil bzw. zu einer Audiospur der Dateninhalte DI, ist vor allem auch deshalb relevant, da nach Angabe der Motion Picture Association of America ein unberechtigtes Kopieren von Dateninhalten DI zu ca. 90% beispielsweise durch Mit- bzw. Abfilmen der Dateninhalte, insbesondere von Videodateninhalten, mittels Kamera, Camcorder, Mitkopier-Software, etc. durchgeführt wird. Gerade beim Übertragen und Abspielen der Dateninhalte DI auf so genannten Personal Entertainment Devices bzw. mobilen Endgeräten eines Nutzers kann durch das erfindungsgemäße Verfahren jedoch sehr einfach und schnell sowie ohne großen Aufwand eine zusätzliches Störsignal SG (z.B. Gesprächsgeräusche, Hintergrundgeräusch, etc.) mit vorhandenen Dateninhalten DI kombiniert werden, sodass eine unberechtigte Kopie große Qualitätsmängel und Störungen aufweist. Diese Kopie ist damit wertlos und uninteressant.

Mit dem erfindungsgemäßen Verfahren kann damit auf vorteilhafte Weise ein zusätzlicher Schutz - neben gängigen Schutzmechanismen - für Dateninhalte DI, insbesondere beim Ausspielen in Personenbeförderungseinrichtungen wie z.B. Flugzeugen, etc. erreicht werden. Insbesondere bei der Variante des so genannten aktiven Audio Noise Cloak oder Audio Noise Cloaking (= Kombination eines Rauschen und eines phasenverschobenen Störgeräusches der berechtigten Abspielumgebung ASU zu einem Störsignal SG) kann einerseits eine Verbesserung einer Abspielqualität in einer berechtigten Abspielumgebung ASU (z.B. Flugzeug, etc.) erzielt werden, während hingegen in anderen Abspielumgebungen, welche z.B. auf eine unberechtigt erstellte Kopie, etc. zugreifen, einen wesentliche Verschlechterung der Abspielqualität auftritt.

## Patentansprüche

1. Verfahren zum Schützen von Dateninhalten (DI), insbesondere Audio- und/oder Videodateninhalten, vor widerrechtlichem Kopieren, wobei die Dateninhalte (DI) von einem Unterhaltungssystem (US) zur Verfügung gestellt (1) und auf in einer zum Abspielen der Dateninhalte (DI) berechtigten Abspielumgebung (ASU) befindlichen Ausgabeeinheiten (AE1, AE2, ..., AEn) ausgegeben werden (4), **dadurch gekennzeichnet, dass** in der berechtigten Abspielumgebung (ASU) die Dateninhalte (DI) von dem Unterhaltungssystem (US) auf eine Ausgabeeinheit (AE1, AE2, ..., AEn) übertragen werden (3), und dass zu den Dateninhalten (DI) ein Störsignal (SG) derart hinzugefügt wird (2), dass bei einem Abspielen der Dateninhalte (DI) außerhalb der berechtigten Abspielumgebung (ASU) eine Störung bewirkt wird.

2. Verfahren nach Anspruch 1, **dadurch gekennzeichnet, dass** ein Hinzufügen des Störsignals (SG) vor Aufspielen der Dateninhalte (DI) auf das Unterhaltungssystem (US) oder vor einem Übertragen der Dateninhalte (DI) auf die Ausgabeeinheit (AE1, AE2, ..., AEn) oder vor einem Abspielen durch die Ausgabeeinheit (AE1, AE2, ..., AEn) durchgeführt wird (2).

3. Verfahren nach einem der Ansprüche 1 bis 2, **dadurch gekennzeichnet, dass** das Störsignal (SG) einem Audioanteil der Dateninhalte (DI) beigefügt wird.

4. Verfahren nach einem der Ansprüche 1 bis 3, **dadurch gekennzeichnet, dass** als Störsignal (SG) ein Rauschen hinzugefügt wird (2).

5. Verfahren nach einem der Ansprüche 1 bis 4, **dadurch gekennzeichnet, dass** das Rauschen mit einem phasenverschobenen Störgeräusch der berechtigten Abspielumgebung (ASU) gemischt wird, und dass dann das mit dem phasenverschobenen Störgeräusch gemischte Rauschen als Störsignal (SG) zu den Dateninhalten (DI) hinzugefügt wird (2).

6. Verfahren nach einem der Ansprüche 1 bis 5, **dadurch gekennzeichnet, dass** als berechtigte Abspielumgebung (ASU) ein Innenraum eines Personenbeförderungsmittels, insbesondere Flugzeugs, vorgesehen wird.

7. Verfahren nach einem der Ansprüche 1 bis 6, **dadurch gekennzeichnet, dass** als Ausgabeeinheit (AE1, AE2, ..., AEn) ein mobiles Endgerät oder ein so genanntes Personal Entertainment Device verwendet wird.
